(19) Europäisches Patentamt
European Patent Office
Office européen des brevets

(11) **EP 4 443 303 A1**

(12) **EUROPEAN PATENT APPLICATION**
published in accordance with Art. 153(4) EPC

(43) Date of publication:
**09.10.2024  Bulletin 2024/41**

(21) Application number: **24705939.7**

(22) Date of filing: **23.01.2024**

(51) International Patent Classification (IPC):
*G06F 11/34* (2006.01)   *G06F 11/30* (2006.01)
*G06F 11/32* (2006.01)   *G06F 11/14* (2006.01)

(52) Cooperative Patent Classification (CPC):
**G06F 11/14; G06F 11/30; G06F 11/32; G06F 11/34**

(86) International application number:
**PCT/KR2024/001088**

(87) International publication number:
**WO 2024/158199 (02.08.2024 Gazette 2024/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.01.2023  KR 20230010195
14.02.2023  KR 20230019655**

(71) Applicant: **Samsung Electronics Co., Ltd.
Suwon-si, Gyeonggi-do (KR)**

(72) Inventor: **PARK, Unsang
Gyeonggi-do 16677 (KR)**

(74) Representative: **Gulde & Partner
Patent- und Rechtsanwaltskanzlei mbB
Wallstraße 58/59
10179 Berlin (DE)**

(54) **ELECTRONIC DEVICE AND METHOD FOR DETECTING PERFORMANCE CHANGE IN ELECTRONIC DEVICE**

(57)    An electronic device according to an embodiment of the disclosure includes a memory and a processor operatively connected to the memory, wherein the processor is configured to detect an activity incurred based on a user input and to execute a plurality of operations included in the activity. The processor is configured to identify a delay time incurred by each of the plurality of operations executed, to identify, from a list stored in the memory, previous delay times stored by being mapped to the plurality of performed operations, to calculate, for each of the plurality of operations, a gap between a previous delay time identified from the list and a delay time identified when the operation is executed, and to determine, based on the plurality of calculated gaps, whether a change in the performance of the electronic device occurs.

FIG. 4

EP 4 443 303 A1

**Description**

[Technical Field]

The disclosure relates to an electronic device and, for example, relates to a method in which an electronic device detects a performance change that may be incurred by a user activity.

[Background Art]

A portable electronic device (hereinafter, an electronic device), such as a smartphone needs to process a large amount of high-quality data in order to provide various types of user experiences. To this end, a high-performance computing system is required and a multi-process computer architecture with multiple cores (e.g., dual, quad, octa core) is being developed. Those multi-processor systems are configured to simultaneously perform parallel processing of multiple program codes, and more particularly, provide an environment where various processes and threads are simultaneously executed while a plurality of processors are operated in parallel.

In the case of multi-processor computing systems embodied in an electronic device, a plurality of program code parts respectively performed in independent processors need to be accessible to a shared resource, and accordingly, a bottleneck phenomenon may occur. As many threads that are being executed in a computing system compete for using limited resources such as a memory, a I/O device, a network, and the like, a delay of a predetermined thread may be incurred. A bottleneck phenomenon is a phenomenon in which the performance of the whole system deteriorates due to the delay of some threads. There may be various causes of the bottleneck phenomenon of the system performance, such as a lack of resources, competition for shared resources, a predetermined thread having a monopoly on resources, inappropriate configuration/operation of resources, and the like.

[Disclosure of Invention]

[Technical Problem]

In order to reduce the bottleneck of the performance in a multi-processor computing system, an electronic device detects a situation in which the amount of system resources is insufficient, and forcibly allocates system resources, which are not sufficient, so as to reduce the bottleneck phenomenon. The above-mentioned scheme is automatically performed in the electronic device, irrespective of the intention of a user, and thus may affect the operation of a predetermined application or function, and in case that a bottleneck phenomenon occurs in a predetermined thread due to a user activity (e.g., installation and execution of a predetermined application, downloading a large capacity of a file, and executing a low-power mode), reduction of the bottleneck phenomenon may be difficult or a user activity may be restricted.

[Solution to Problem]

An electronic device according to an embodiment of the disclosure includes a memory and a processor operatively connected to the memory.

The processor is configured to detect an activity performed based on a user input and to execute a plurality of operations of the activity.

In particular, the processor is configured to identify a delay time incurred by each of the plurality of operations executed, to identify, from a list stored in the memory, previous delay times stored by being mapped to the plurality of performed operations, to calculate, for each of the plurality of operations, a gap between a previous delay time identified from the list and a delay time identified when the operation is executed, and to determine, based on the plurality of calculated gaps, whether a change in the performance of the electronic device occurs.

A method of detecting a change in the performance of an electronic device according to an embodiment of the disclosure includes an operation of detecting an activity incurred based on a user input, an operation of executing a plurality of operations included in the activity, an operation of identifying a delay time incurred by each of the plurality of executed operations, an operation of identifying, from a list stored in a memory, previous delay times stored by being mapped to the plurality of executed operations, an operation of calculating, for each of the plurality of operations, a gap between the previous delay time identified from the list and a delay time identified when the operation is executed, and an operation of determining, based on the plurality of calculated gaps, whether a change in the performance of the electronic device occurs.

[Advantageous Effects of Invention]

According to various embodiments of the disclosure, in case that a delay is incurred due to a user activity and affects the performance of an electronic device, there may be provided an electronic device and a method of detecting a change in the performance of the electronic device, which may detect a change in the performance before/after an activity is performed, and may provide feedback to a user in case that the performance changes, so as to improve the performance according to a user action.

[Brief Description of Drawings]

FIG. 1 is a block diagram illustrating an electronic device in a network environment according to an embodiment;
FIG. 2 is a block diagram of a program according to an embodiment;
FIG. 3 is a block diagram of an electronic device according to an embodiment;
FIG. 4 is a block diagram of a software module that operates in an electronic device according to an embodiment;
FIG. 5 is a diagram illustrating a latency list, an activity list, and sample maps according to an embodiment;
FIG. 6 is a flowchart of a process in which an electronic device produces a sample map as an activity is performed according to an embodiment;
FIG. 7 is a flowchart of a process in which an electronic device identifies and records a delay time according to an embodiment;
FIG. 8 is a flowchart of a process in which an electronic device detects a change in a performance via statistical analysis according to an embodiment; and
FIG. 9 is a diagram illustrating a graphic user interface provided when the performance of an electronic device changes according to an embodiment.

[Mode for the Invention]

Hereinafter, embodiments of the disclosure will be described in detail with reference to enclosed drawings, so that those skilled in the art could easily implement the embodiments. However, the disclosure could be implemented in different manners, and is not limited to the embodiments described below. Identical or like reference numerals in the drawings denote identical or like elements. In addition, a description of a well-known function and configuration may be omitted in the drawings and related descriptions for clarity and simplicity.

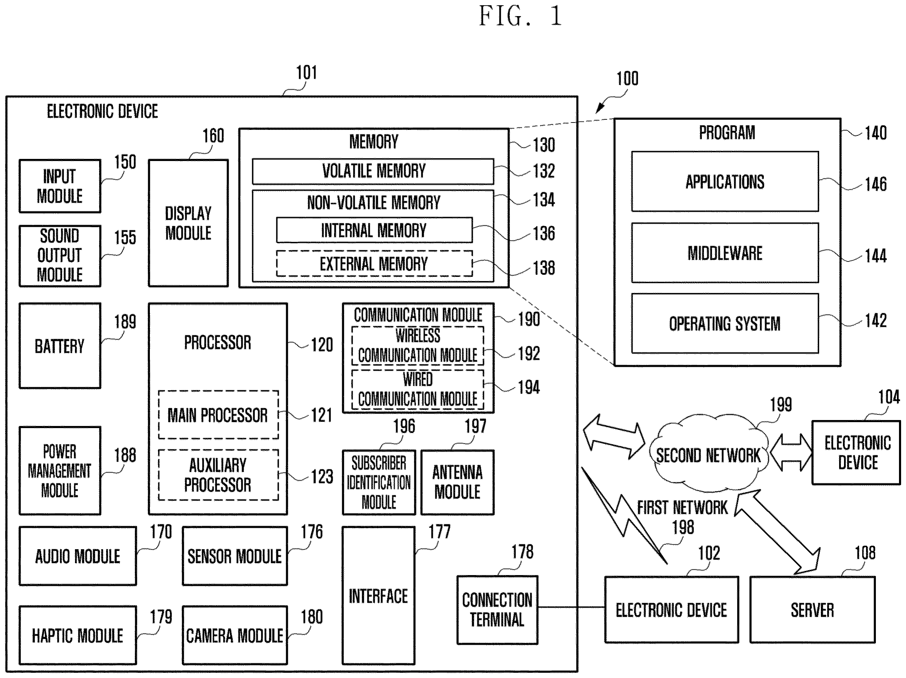

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

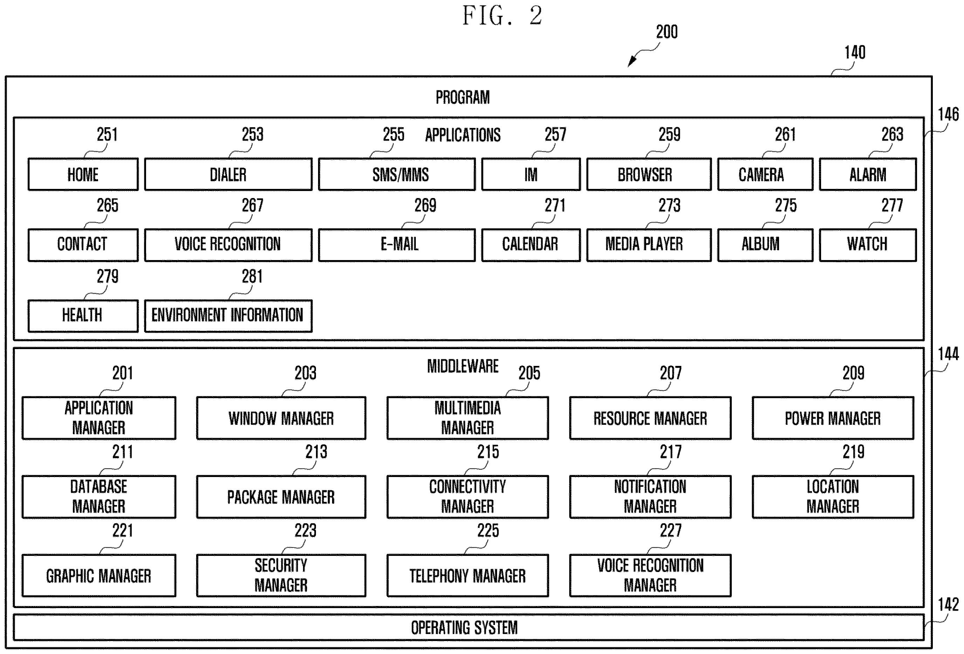

FIG. 2 is a block diagram of a program according to various embodiments.

According to an embodiment, the program 140 may include an operating system 142 for controlling one or more resources of the electronic device 101, middleware 144, or an application 146 executable on the operating system 142. The operating system 142 may include, for example, Android™, iOS™, Windows™, Symbian™, Tizen™, or Bada™. At least some of the programs 140 may be, for example, preloaded in the electronic device 101 during manufacturing, or be downloaded or updated from an external electronic device (e.g., the electronic device 102 or 104 or the server 108) in the user's use environment.

The operating system 142 may control (e.g., allocate or reclaim) system resources (e.g., process, memory, or power) of the electronic device 101. The operating system 142 may include one or more driver programs for additionally or alternatively driving other hardware devices of the electronic device 101, for example, the input device 150, the audio output device 155, the display device 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 to enable the application 146 to use functions or information provided by one or more resources of the electronic device 101. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphics manager 221, a security manager 223, a call manager 225, or a voice recognition manager 227. The application manager 201 may manage, for example, the life cycle of the application 146. The window manager 203 may manage, for example, GUIresources used in a screen. The multimedia manager 205 may, for example, identify a format necessary for reproducing media files, and encode or decode the media file by using a codec suitable for the format. The resource manager 207 may manage, for example, a source code of the application 146 or a memory space. The power manager 209 may manage, for example, battery capacity, temperature, or power, and determine or provide power information necessary for the operation of the electronic device 101 by using corresponding information among them. According to an embodiment, the power manager 209 may interwork with a basic input/output system (BIOS).

The database manager 211 may, for example, generate, search, or change a database to be used in the application 146. The package manager 213 may manage, for example, installation or update of applications distributed in the form of package files. The connectivity manager 215 may manage, for example, a wireless or wired connection between the electronic device 101 and an external electronic device. The notification manager 217 may, for example, provide a function of notifying a user of an event (e.g., a call, message, or alarm) that has occurred. The location manager 219 may manage, for example, location information of the electronic device 101. The graphic manager 221 may manage, for example, a graphic effect to be provided to a user or a user interface related thereto. The security manager 223 may provide, for example, system security or user authentication. The telephony manager 225 may manage, for example, a voice call or video call function of the electronic device 101. The voice recognition manager 227 may, for example, transmit user's voice data to the server 108 and receive a command corresponding to a function to be performed based on the voice data by the electronic device 101 or text data converted based on the corresponding voice data. According to an embodiment, the middleware 244 may dynamically delete some existing components or add new components. According to an embodiment, at least part of the middleware 144 may be included as part of the operating system 142 or may be implemented as software separate from the operating system 142.

The applications 146 may include applications, for example, home 251, dialer 253, SMS/MMS 255, instant message (IM) 257, browser 259, camera 261, alarm 263, contact 265, voice recognition 267, email 269, calendar 271, media player 273, album 275, watch 277, health 279 (e.g., measure exercise or blood sugar), or environmental information 281 (e.g., barometric pressure, humidity, or temperature information). According to an embodiment, the application 146 may further include an information exchange application (not shown) capable of supporting information exchange between the electronic device 101 and an external electronic device. The information exchange applications may include, for example, a notification relay application for forwarding designated information (e.g., a call, message, or alarm) to an external electronic device, or device management application for managing the external electronic device. The notification relay application may, for example, transmit notification information corresponding to an event (e.g., mail reception) generated in another application (e.g., email application 269) of the electronic device 101 to an external electronic device, or receive notification information from the external electronic device to provide the notification information to the user of the electronic device 101. The device management application may control power (e.g., turn-on or turn-off) or functions (e.g., brightness, resolution, or focus of the display device 160 or camera module 180) of an external electronic device communicating with the electronic device 101 or some components (e.g., the display device 160 or the camera module 180) thereof. The device management application may additionally or alternatively support installation, deletion, or update of an application operating in an external electronic device.

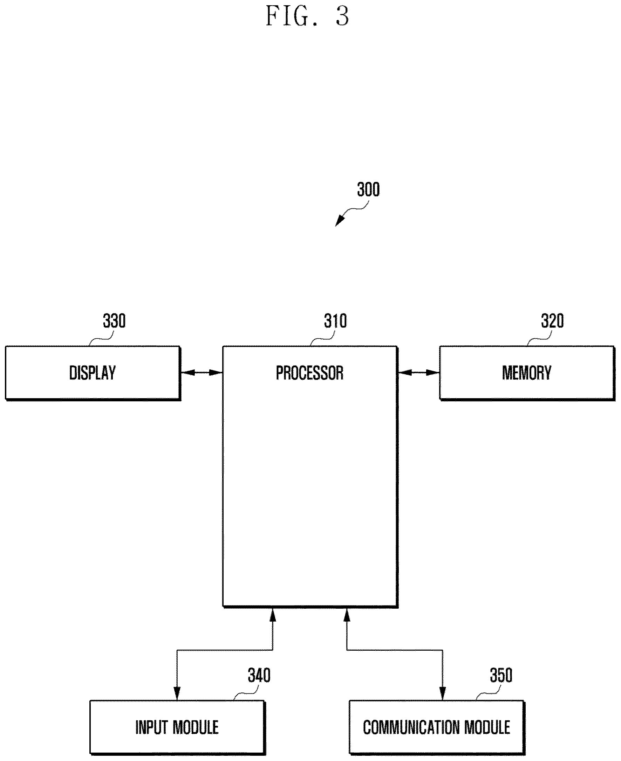

FIG. 3 is a block diagram of an electronic device according to an embodiment.

Referring to FIG. 3, an electronic device 300 according to an embodiment may include a display 330, a processor 310, and a memory 320, and may be capable of implementing various embodiments of the disclosure although a part of the illustrated configuration is omitted or is replaced with another configuration. In addition to the illustrated configuration, the electronic device 300 may further include at least a part of the configuration and/or functions of the electronic device 101 of FIG. 1. At least a part of the illustrated (or not illustrated) configuration of the electronic device 300 may be operatively, functionally, and/or electrically connected.

According to an embodiment, the display 330 may be embodied as one of the displays such as a liquid crystal display (LCD), a light-emitting diode (LED) display, and an organic light-emitting diode (OLED) display, but is not limited thereto. The display 330 may be embodied as a touch screen that detects a touch input by using a body part (e.g., a finger) of a user or an input device (e.g., a stylus pen) and/or detects a proximity touch (or hovering) input. The display 330 may include at least a part of the configuration and/or functions of the display module 160 of FIG. 1. At least a part of the display 330 may be flexible, and the display 330 may be embodied as a foldable display or a rollable display. The display 330 may include at least a part of the configuration and/or functions of the display module 160 of FIG. 1.

According to an embodiment, an input module 340 may be a device for receiving, from a user, a command or data to be used for each configuration of the electronic device 300. The input module 340 may include, for example, a microphone, a mouse, or a keyboard. The input module 340 may be physically separated from the electronic device 300 and may be connected via wireless communication using a communication module 350. The input module 340 may include at least a part of the configuration and/or functions of the input module 150 of FIG. 1.

According to an embodiment, the communication module 350 may include various types of hardware and/or software configurations for supporting wireless communication with an external device. The communication module 350 may support short-distance wireless communication (e.g., Wi-Fi, Bluetooth) and cellular wireless communication (e.g., 4G LTE, 5GNR). The communication module 350 may include at least a part of the configuration and/or functions of the communication module 190 of FIG. 1. However, the communication module 350 is not limited thereto.

According to an embodiment, the memory 320 may include volatile memory and non-volatile memory so as to temporarily or permanently store various data. The memory 320 may include at least a part of the configuration and/or functions of the memory 130 of FIG. 1, and may store the program 140 of FIG. 1.

According to various embodiments, the memory 320 may store various instructions executable in the processor 310. The instructions may include control commands, such as arithmetic and logic operation, data transfer, input and output, and the like, which may be recognized by the processor 310.

According to an embodiment, the processor 310 may be a configuration capable of controlling of each component element of the electronic device 300 and/or performing of operations related to communication or data processing, and may be configured with one or more processors. The processor 310 may be electrically, functionally, and/or operatively connected to each component element of the electronic device 300, such as the memory 320, the display 330, the input module 340, and the communication module 350. The processor 310 may include at least a part of the configuration and/or functions of the processor 120 of FIG. 1.

According to an embodiment, the electronic device 300 may include a multi-processor computer architecture such as dual, quad, or octa cores. For example, the electronic device 300 may configure the processor 310 by integrating multiple cores that perform essential operation such as an operation in a single integrated circuit. According to an embodiment, the processor 310 may be embodied as a single-core processor. However, the processor 310 is not limited to the aforementioned architectures but may also be realized differently, e.g. as a hexa-core or the like.

According to an embodiment, operations and data processing functions that the processor 310 are capable of embodying in the electronic device 300 are not limited. However, hereinafter a description will be provided in association with the electronic device 300 that identifies a delay of a system incurred by a function executed according to a user activity, identifies whether a change occurs in the performance of the electronic device 300 via statistical analysis, and provides feedback to a user. Operations of the processor 310 to be described below may be performed by loading instructions stored in the memory 320.

According to an embodiment, the processor 310 may detect activity based on a user input, and may execute a plurality of operations or actions corresponding to the activity. According to an embodiment, the type of activity is not limited, and may include various activities executable in the electronic device 300 according to a user input, the various activities including, for example, system bootup, screen unlocking, execution of a predetermined application or function, accessing a predetermined webpage, installation of a new application, file downloading, changing a setting in settings. In addition, examples of a user input may be a touch input on the display 330, a user input via the input module 340 (e.g., a voice input via a microphone, a keyboard input, a mouse input), or a user input received from an external device (e.g., a keyboard, a mouse, earbuds, or other electronic devices) connected to the electronic device 300 via wireless communication (e.g., Bluetooth, Wi-Fi) using the communication module 190, or a user input received from an external device connected to the electronic device 300 in a wired manner via the connection terminal 178. However, a user input is not limited thereto and the type of user input is not defined. For example, a user input may also pertain to using a hardware button of the electronic device 300.

According to an embodiment, in case that a predetermined activity is triggered, the processor 310 may perform a plurality of operations or actions included in the corresponding activity. Here, the operation may include a function, a process, and/or a thread performed by the processor 310 in order to execute the activity. According to an embodiment, a single activity may be performed while multiple operations are performed. For example, in case that activity A is triggered in response to a user input, the processor 310 may perform operation 1 and operation 2 included in activity A, and each of operation 1 and operation 2 may include at least one function, process, and/or thread.

According to an embodiment, in case that operations corresponding to a predetermined activity are performed, a delay may be incurred in the system of the electronic device 300. Here, the delay may include various types of operation delays that may be incurred in the electronic device as the operations corresponding to the activity are performed and occupy resources. For example, examples of the delay may include the case in which a predetermined operation causes a delay of another operation (e.g., a processor, a thread) while the predetermined operation is performed, the case in which execution of a predetermined operation is delayed while the predetermined operation is performed, and/or the case in which a standby time for executing an operation is long. According to an embodiment, the electronic device 300 may include a multi-processor (or a multi-core) computing system, and multiple threads in the system compete for using limited resources such as the memory 320, a I/O device, and a network, and thus a bottleneck phenomenon may occur. Due to the bottleneck phenomenon, at least some of the multiple operations of a predetermined activity may be delayed, and the performance of the whole system may deteriorate. For example, among user activities, activities such as installation of a new application, file downloading, and/or changing a setting in settings may have a high probability of affecting the performance of the system due to the delay of an operation.

According to an embodiment, the memory 320 may store a latency list. A tag (e.g., DTag) of an operation (or a location) that causes a delay and a delay time incurred by the corresponding operation are mapped and stored in the latency list. According to an embodiment, the processor 310 may identify a delay time of each operation when an operation in association with a predetermined activity is performed, and may update, with the identified delay time, a delay time mapped to a delay tag in the latency list. A delay time stored in the latency list is a delay time measured previously for each operation, and thus, hereinafter, it is referred to as a previous delay time.

According to an embodiment, the latency list may be stored in a designated area of the memory 320. For example, in case that information associated with operation 1 to operation 4 are recorded in the latency list, the following examples may be taken as delay tags and delay times corresponding to operation 1 to operation 4, respectively. An operation (or processor) corresponding to each delay tag described below is merely an example, and is not limited thereto.

DTag1 : lock_registerReceiverWithFeature_15463, Delay1 : 79
DTag2 : mainlooper_TrustManagerService, Delay2 : 49
DTag3 : lock_getPendingJobs_1285, Delay3 : 325
DTag4 : mainlooper_QuotaController, Delay4 : 126

According to an embodiment, in each delay tag (e.g., DTag1 to DTag4), an identifier (e.g., a process name, a processor ID) for identifying each operation and a delay time incurred in a system due to the corresponding operation may be mapped and stored in a unit of a predetermined time (e.g., ms). However, the aforementioned identifier and time unit are not limiting.

According to an embodiment, the memory 320 may store an activity list. An activity tag (e.g., ATag), a timer time used for producing a sample map for each activity, at least one operation (or function) performed when each activity is performed, and/or whether a change of the performance of the electronic device 300 is detected when an activity is performed may be mapped and stored in the activity list. According to an embodiment, only an activity having a high probability of affecting the system performance of the electronic device 300 may be stored in the activity list. For example, when at least one operation included in the activity is performed, activities, such as an activity that produces a large amount of load in a central processing unit (CPU) or a graphics processing unit (GPU), an activity that requires allocation of a large amount of resources (e.g., memory, storage resources), an activity including a predetermined system instruction, an activity that activates a function that limits the performance of an electronic device by reason of reducing the amount of current consumed or heat generated, may affect the system performance of the electronic device 300. A plurality of activities may also be considered to cause an application to have a high probability of affecting the system performance of the electronic device 300. In addition, for example, among user activities, activities such as installation of a new application, file downloading, and/or changing a setting in settings may have a high probability of affecting the performance of the system due to the delay of an operation. The electronic device 300 may store, in the activity list, only activities having high probabilities of affecting a system performance. According to an embodiment, the activity list may be stored in a designated area of the memory 320.

Hereinafter, an embodiment in which the electronic device 300 (or the processor 310) calculates a delay time incurred by execution of an operation of an activity when user activity is performed, and determines, via statistical analysis, whether the performance of the electronic device 300 is affected, will be described.

According to an embodiment, the processor 310 may detect an activity performed based on a user input and may perform a plurality of operations of the activity. According to an embodiment, the processor 310 may calculate a delay time of each operation executed.

According to an embodiment, previous delay times mapped to multiple executed operations and stored may be identified from the latency list stored in the memory 320. For example, the processor 310 may identify, from the latency list, a previous delay time mapped to a delay tag of an operation included in an activity.

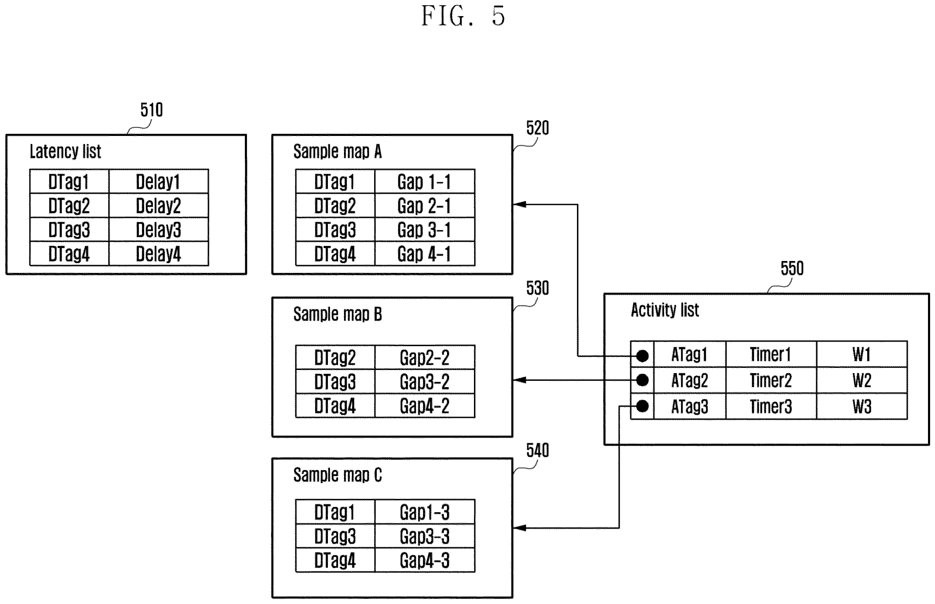

According to an embodiment, in case that an activity is performed, the processor 310 may add information associated with the corresponding activity to the activity list. In addition, the processor 310 may produce a sample map for storing a gap between a delay time associated with the execution of the corresponding activity and a previous delay time, and may initiate a timer. Here, the timer defines a time interval for collecting delay time information when an operation of an activity is performed, and in case that the timer is initiated, the processor 310 may identify a delay time and a previous delay time of each operation until the timer expires, and may store the same in the sample map. An embodiment of a latency list, an activity list, and a sample map will be described in detail with reference to FIG. 5.

According to an embodiment, for each of the plurality of operations performed according to an activity, the processor 310 may calculate a gap (or a difference, a variation, etc.) between a previous delay time identified from the latency list and a delay time identified when an operation is executed. According to an embodiment, a delay time of an operation of which a delay tag is stored in advance in the latency list may be identified among a plurality of operations executed. The processor 310 may store a calculated gap in a sample map. Here, the gap may be a change in the delay time incurred due to a predetermined operation before and after the occurrence of the activity, and as the gap is high, it is identified that the performance of the system deteriorates due to the corresponding operation.

For example, the delay times of DTag1 to DTag4 may be stored in the latency list, as follows.

DTag1 : lock_registerReceiverWithFeature_15463, Delay1 : 79
DTag2 : mainlooper_TrustManagerService, Delay2 : 49
DTag3 : lock_getPendingJobs_1285, Delay3 : 325
DTag4 : mainlooper_QuotaController, Delay4 : 126

Subsequently, operations of DTag1, DTag3, and DTag4 are executed according to the execution of a predetermined activity, and it is identified that the delay time of DTag1 identified within the expiration time of a timer is 102ms, the delay time of DTag3 is 320ms, and the delay time of DTag4 is 136ms. In this instance, information stored in a sample map may be as follows.

DTag1 : lock_registerReceiverWithFeature_15463, Gap1-3 : 23
DTag3 : lock_getPendingJobs_1285, Gap3-3 : -5
DTag4 : mainlooper_QuotaController, Gap4-3 : 10

According to an embodiment, in case that a tag and a previous delay time of an operation executed according to an activity are not stored in the latency list stored in the memory 320, the processor 310 may calculate a gap to be 0, i.e. zero.

According to an embodiment, in case that the timer expires, the processor 310 may determine, based on a gap (or a variation) of a delay time stored in the sample map, whether a change in the performance of the electronic device 300 occurs.

According to an embodiment, the processor 310 may determine, via statistical analysis, whether a change occurs in the performance of the electronic device 300. According to an embodiment, the processor 310 may calculate a statistical value via designated statistical analysis by using, as input values, a plurality of calculated gaps respectively corresponding to a plurality of operations, and may determine, based on the calculated statistical value, whether a change in the performance of the electronic device 300 occurs.

According to an embodiment, the processor 310 may use a Wilcoxon signed rank test. According to an embodiment, the processor 310 may assign rankings to the plurality of calculated gaps according to the magnitude of absolute values, may calculate statistics W using the sum of the plurality of gaps, may calculate a standard value Z by performing normal approximation on the calculated statistics W, and may determine that a change in the performance of the electronic device 300 occurs in case that the calculated standard value Z is greater than or equal to a reference value.

For example, in case that a predetermined activity is triggered, the processor 310 may calculate the gap, the ranking, and the sign ranking of a delay time as shown in Table 1 below by using a delay time of an operation executed and a previous delay time identified for each operation from the latency list.

Table 1

| DTag | Gap | Ranking | Sign ranking |
|---|---|---|---|
| lock_registerReceiverWithFeature_15463 | 23 | 4 | 4 |
| lock_getPendingJobs_1285 | -5 | 2 | -2 |
| mainlooper_QuotaController | 10 | 3 | 3 |
| mainlooper_TrustManagerService | 102 | 6 | 6 |
| binder_2714_10 | 43 | 5 | 5 |
| binder_2714_E | 2 | 1 | 1 |

According to an embodiment, when the gap and the sign rankings of delay time is calculated, the processor 310 may calculate statistics W using sum of the sign rankings of DTags. In case that the gap of a delay time is calculated as the table 1, statistics W may be calculated to be 1 + 3 + 4 + 5 + 6 - 2 = 17 which is the sum of the sign rankings of DTags. The processor 310 may calculate a standard value Z by performing normal approximation of statistics W according to Equation 1 below.

[Table 1]

[Equation 1]

$$Z = \frac{|W| - 1/2}{\sqrt{[n(n+1)(2n+1)]/6}}$$

In Equation 1, W represents statistics obtained by adding sign rankings, and n may be the number of gaps stored in a sample map.

According to an embodiment, in case that the calculated standard value Z falls within a critical region, the processor 310 may determine that a change in the performance of the electronic device 300 occurs. For example, in case that a significance level is determined to be 5% and statistics Z based on the one-tailed test is greater than or equal to 1.645, this may fall within a critical region. The calculated Z value in the example of Table 1 is approximately 1.72966 and is greater than a reference value of 1.645, and thus the processor 310 may determine that a change in the performance of the electronic device 300 occurs.

The case in which the electronic device 300 determines whether a change in the performance of the electronic device 300 occurs via the Wilcoxon signed rank test is one embodiment, and various statistical analysis methods, e.g. other nonparametric statistical tests, may be used in addition to or instead of the Wilcoxon signed rank test.

According to an embodiment, in case that a change in the performance of the electronic device 300 is determined as occurring, the processor 310 may provide a notification indicating a change in the performance. According to an embodiment, the processor 310 may display a graphic user interface indicating a change in the performance via the display 330. For example, the processor 310 may display a graphic user interface including the content of an activity (e.g., file downloading, application installation, photographing) that causes a change in the performance and an item for restoring each activity to a state before the activity was executed. According to an embodiment, the processor 310 may provide a notification indicating a change in the performance as an audio signal via a speaker (not illustrated) or an external audio device (e.g., an external speaker, earphones, earbuds) connected in a wired/wireless manner. Examples of a notification provided by the electronic device 300 are not limited thereto.

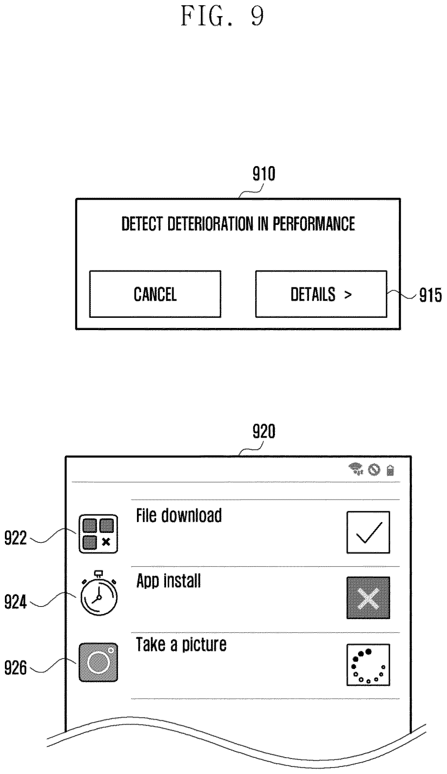

According to an embodiment, the processor 310 may restore, based on a user input, a state before a selected activity was executed. For example, based on a user selection, the processor 310 may delete an application that causes a change in the performance of the electronic device 300, or may delete a file downloaded, or may restore a changed setting (e.g., a power saving mode) to an existing state or a previously used state. According to an embodiment, in case that a notification indicating a change in the performance is provided via a graphic user interface, the processor 310 may restore, based on a user history associated with the graphic user interface, a state before a selected activity was executed. The graphic user interface indicating a change in the performance is described in detail with reference to FIG. 9.

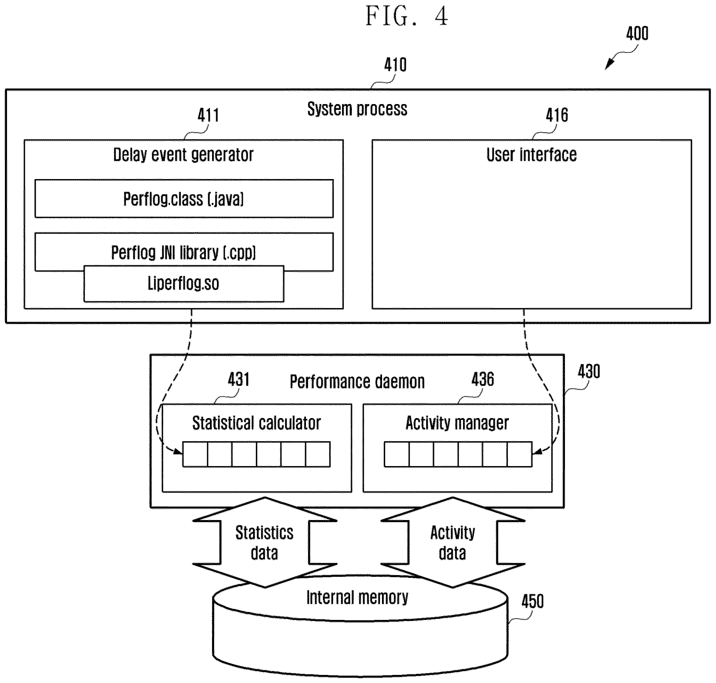

FIG. 4 is a block diagram of a software module that operates in an electronic device according to an embodiment.

Each illustrated software module 400 may be non-permanently stored in a memory (e.g., the memory 320 of FIG. 3), and may be executed by a processor (e.g., the processor 310 of FIG. 3).

According to an embodiment, an electronic device (or a processor) may execute various system processes 410 that are in charge of the essential part related to operating a system. The system process 410 may be a kernel process that is executed in a kernel space.

According to an embodiment, as a part of the system process 410, the electronic device may operate a delay event generator 411 and a user interface 416. According to an embodiment, the delay event generator 411 may be provided in the form of a class or a java native interface (JNI) library. For example, the delay event generator 411 may include various classes and/or libraries (e.g., Perflog.class(java), Perflog JNI library(cpp), Libperflog.so, and the like) that records a delay time incurred by an operation (e.g., a function, a thread, a processor) executed according to an activity. However, the recording of a delay time is not limited thereto. The delay event generator 411 may produce, as an event (e.g., a bottleneck event), a delay situation incurred due to execution of each system process, and may provide the event to a performance daemon 430 (or an event processor).

According to an embodiment, in case that a user input is detected, the user interface 416 may trigger an activity based on the user input. For example, the activity may include functions executable in an electronic device, such as execution of an application, installation of a new application, and file downloading, and the type of activity is not defined.

According to an embodiment, the performance daemon 430 may include a statistical analyzer (or a statistical calculator) 431 and an activity manager 436. According to an embodiment, the performance daemon 430 may receive an event associated with a delay situation from a plug-in, may compare with a threshold value for a delay time, and may detect whether a bottleneck phenomenon occurs. In case that the bottleneck phenomenon is detected, the performance daemon 430 may calculate statistical data and may store the same in an internal memory 450. According to an embodiment, the performance daemon 430 may perform designated statistical analysis using, as input values, a plurality of gaps respectively corresponding to a plurality of operations executed as an activity is triggered. Here, statistical analysis may be the Wilcoxon signed rank test, but it is not limited thereto. The performance daemon 430 may store calculated statistical data in the internal memory 450. For example, statistical data may be stored in a sample map corresponding to an activity that is performed. The internal memory 450 may include one region of a non-volatile memory (e.g., the memory 320 of FIG. 3).

According to an embodiment, the user interface 416 may produce, as an activity event, information related to a designated activity to be executed according to a user input, and may transfer the activity event to an activity manager 436. The activity manager 436 may calculate a statistical value of a delay time obtained before an activity event, and transferred by using previous delay data stored in advance in a latency list, may calculate a statistical value of a delay time obtained after the activity event, and may determine whether a change in the performance occurs. The user interface 416 may store activity data (e.g., an activity tag, a delay tag of an operation in an activity, a timer designated for an activity) in one region of the internal memory 450. For example, activity data may be stored in an activity list.

FIG. 5 is a diagram illustrating a latency list, an activity list, and sample maps according to an embodiment.

FIG. 5 illustrates a latency list 510 recorded when a delay time is incurred due to a user activity and operations of the activity, an activity list 550, and a plurality of sample maps 520, 530, and 540, and illustrates sample map A 520, sample map B 530, and sample map C 540 produced when activities A, B, and C are produced, respectively. The illustrated latency list 510, the activity list 550, and the plurality of sample maps 520, 530, and 540 may be stored in the memory 320 of FIG. 3 and/or the internal memory 450 of FIG. 4.

According to an embodiment, a memory may store the latency list 510. A delay tag (e.g., DTag) of an operation (or a location) that causes a delay and a delay time incurred by the corresponding operation are mapped and stored in the latency list 510. A delay time stored in the latency list 510 is a delay time measured previously for each operation, and thus, hereinafter, it is referred to as a previous delay time.

According to an embodiment, a memory may store the activity list 550. The activity list 550 may map the tag (e.g., ATag) of an activity, a timer time to be used for producing a sample map for each activity, and at least one operation (or function) executed when each activity is performed, and may store the same. For example, in case that operations 1 to 4 are executed by predetermined activity A, delay tags (e.g., DTag1 to DTag4) of operations 1 to 4 that incur a delay of a system are mapped to the tag (e.g., ATag1) of activity A and are stored. A timer indicating a time at which a delay time incurred by operations 1 to 4 is collected and information that is based on a statistical analysis result and is associated with whether activity A affects a system performance are mapped and stored. According to an embodiment, among a plurality of operations of a predetermined activity, a delay tag of at least one operation that causes a delay and a delay time are only mapped and may be stored in the activity list 550.

According to an embodiment, only an activity having a high probability of affecting the system performance of the electronic device may be stored in the activity list 550. For example, when at least one operation included in the activity is performed, activities, such as an activity that produces a large amount of load in a central processing unit (CPU) or a graphics processing unit (GPU), an activity that requires allocation of a large amount of resources (e.g., memory, storage resources), an activity including a predetermined system instruction, an activity that activates a function that limits the performance of an electronic device by reason of reducing the amount of current consumed or heat generated, may affect the system performance of the electronic device. However, multiple of the aforementioned scenarios may be given at the same time, e.g. an activity that requires allocation of a large amount of resources and, at the same time, limits the performance of an electronic device by reason of heat generated. In addition, for example, activities such as installation of a new application, file downloading, and/or changing a setting in settings among user activities may have high probabilities of affecting a system performance due to a delay of an operation. An electronic device may store, in the activity list 550, only such activities having high probabilities of affecting a system performance.

According to an embodiment, in case that a user input is provided via a user interface (e.g., the user interface 416 of FIG. 4), the electronic device may trigger an activity corresponding to the user input. The electronic device may produce the sample map 520, 530, and 540 for storing a gap between a delay time incurred when an activity is executed and a previous delay time. The electronic device may initiate a timer when an activity is performed, may calculate a delay time of each operation until the timer expires, and may record the same in the sample map 520, 530, and 540, the latency list 510, and/or the activity list 550.

According to an embodiment, before activity A, B, and C is performed, the latency list 510 may be in the state of recording delay tags 1 to 4 (DTag1 to DTag4) corresponding to operations 1 to 4 and delay times 1 to 4 (delay 1 to delay 4) corresponding thereto. For example, the delay times of DTag1 to DTag4 may be stored in the latency list 510, as follows.

DTag1 : lock_registerReceiverWithFeature_15463, Delay1 : 79
DTag2 : mainlooper_TrustManagerService, Delay2 : 49
DTag3 : lock_getPendingJobs_1285, Delay3 : 325
DTag4 : mainlooper_QuotaController, Delay4 : 126

In the DTags 1 to 4, an operation (or processor) corresponding to each delay tag is merely an example, and is not limited thereto.

According to an embodiment, for each of the plurality of operations performed according to an activity, the electronic device may calculate a gap (or a difference, a variation, etc.) between a previous delay time identified from the latency list 510 and a delay time identified when an operation is executed. The electronic device may store the calculated gap in the sample map 520, 530, and 540. According to an embodiment, only when an activity (e.g., installation of a new application, file downloading, and/or changing a setting in settings) is performed, which has a high probability of affecting a system performance due to a delay of an operation, e.g. a probability higher than a predefined threshold, the electronic device may perform a process of calculating a delay time and/or producing the sample map 520, 530, and 540.

According to an embodiment, in case that activity A is performed, operations 1 to 4 may be executed, DTag1 to DTag4 and gaps corresponding thereto may be mapped and stored in sample map A 520. According to an embodiment, operations 1 to 4 may be operations of which delay tags are stored in a latency list (or operations having records that cause a delay of a system performance) among a plurality of operations executed according to activity A. For example, the gap (Gap1-1) of DTag1 may be calculated based on the difference between a delay time incurred by the execution of operation 1 when activity A is performed and a previous delay time (delay 1) of DTag1 stored in the latency list 510. In addition, the gap (Gap2-1) of DTag2 may be calculated based on the difference between a delay time incurred by the execution of operation 2 when activity A is performed and a previous delay time (delay 2) of DTag2 stored in the latency list 510, the gap (Gap3-1) of DTag3 may be calculated based on the difference between a delay time incurred by the execution of operation 3 when activity A is performed and a previous delay time (delay 3) of DTag3 stored in the latency list 510, and the gap (Gap4-1) of DTag4 may be calculated based on the difference between a delay time incurred by the execution of operation 4 when activity A is performed and a previous delay time (delay 4) of DTag4 stored in the latency list 510.

According to an embodiment, in case that activity B is performed, the electronic device may produce a new sample map B 530, and may calculate and record, in the sample map B 530, a delay tag (DTag2, DTag3, and DTag4) of an operation of which a delay tag is stored in a latency list among operations of the activity B and a gap (Gap2-2, Gap3-2, and Gap4-2) for each operation. A method of producing the sample map B 530 may be similar or the same as the above-described method of producing the sample map A 520.

According to an embodiment, in case that activity C is performed, the electronic device may produce a new sample map C 540, and may calculate and record, in the sample map C 540, a delay tag (DTag1, DTag3, and DTag4) of an operation of which a delay tag is stored in a latency list among operations of the activity C and a gap (Gap1-3, Gap3-3, and Gap4-3) for each operation. A method of producing the sample map C 540 may correspond to the above-described method of producing the sample map A 520. For example, operations of DTag1, 3, and 4 are executed according to the execution of activity C, and it is identified that the delay time of DTag 1 identified within the expiration time of a timer is 102ms, the delay time of DTag3 is identified as 320 ms, and the delay time of DTag4 is identified as 136ms. In this instance, the gap between a delay time and a previous delay time of the operation of DTag1 is 102 - 79 = 23, the gap between a delay time and a previous delay time of the operation of DTag3 is 320 - 325 = -5, and the gap between a delay time and a previous delay time of the operation of DTag4 is 136 - 126 = 10. According to the above-described calculation, information stored in the sample map C 540 may be as follows.

DTag1 : lock_registerReceiverWithFeature_15463, Gap1-3 : 23
DTag3 : lock_getPendingJobs_1285, Gap3-3 : -5
DTag4 : mainlooper_QuotaController, Gap4-3 : 10

According to an embodiment, in case that a tag and a previous delay time of an operation executed according to an activity are not stored in the latency list 510 stored in a memory, the electronic device may calculate a gap to be 0.
According to an embodiment, in case that the timer expires, the electronic device may determine, based on a gap (or a variation) of a delay time stored in a sample map, whether a change in the performance of the electronic device occurs.
According to an embodiment, the electronic device may determine, via statistical analysis, whether a change occurs in the performance of the electronic device. According to an embodiment, the electronic device may calculate a statistical value via designated statistical analysis by using, as input values, a plurality of calculated gaps respectively corresponding to a plurality of operations, and may determine, based on the calculated statistical value, whether a change in the performance of the electronic device occurs. According to an embodiment, the electronic device may use the Wilcoxon signed rank test. According to an embodiment, the electronic device may assign the rankings to the plurality of calculated gaps according to the magnitude of absolute values, may calculate statistics W using the sum of the plurality of gaps, may calculate a standard value Z by performing normal approximation on the calculated statistics W, and may determine that a change in the performance of the electronic device occurs in case that the calculated standard value Z is greater than or equal to a reference value.

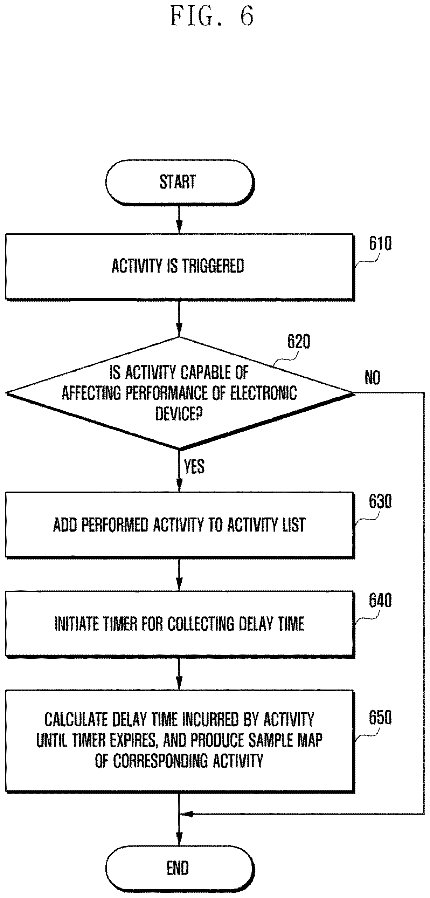

FIG. 6 is a flowchart of a process in which an electronic device produces a sample map as an activity is performed according to an embodiment.
The illustrated method may be performed by an electronic device (e.g., the electronic device 300 of FIG. 3). For example, the method may be performed by a processor (e.g., the processor 310 of FIG. 3) of the electronic device. Hereinafter, the description of technical features which have been described above may be omitted.
According to an embodiment, in operation 610, an electronic device (or a processor) may detect a trigger for an activity according to a user input. For example, a user interface (e.g., the user interface 416 of FIG. 4) may trigger an activity in response to a user input in case that a user input on a display (e.g., the display 330 of FIG. 3), a user input via an input module (e.g., the input module 340 of FIG. 3), or a user input of an external device received via a communication module (e.g., the communication module 350 of FIG. 3) is detected. The activity may include functions executable in an electronic device, such as execution of an application, installation of a new application, and file downloading, and the type of activity is not defined.
According to an embodiment, in operation 620, the electronic device may identify whether an activity is an activity that affects the performance of the electronic device. For example, when at least one operation included in the activity is performed, activities, such as an activity that produces a large amount of load in a central processing unit (CPU) or a graphics processing unit (GPU), an activity that requires allocation of a large amount of resources (e.g., memory, storage resources), an activity including a system instruction, an activity that activates a function that limits the performance of an electronic device by reason of reducing the amount of current consumed or heat generated, may affect the system performance of the electronic device. In addition, for example, among user activities, activities such as installation of a new application, file downloading, and/or changing a setting in settings may have a high probability of affecting the performance of the system due to the delay of an operation. The electronic device may identify whether an activity performed in response to a user input belongs to a predetermined activity as described above. In case that the activity does not belong to the predetermined activity ("No" in operation 620), the electronic device may not perform an operation of calculating a delay time and identifying whether a change in the performance of the electronic device occurs.

According to an embodiment, in case that the performed activity is an activity that may affect the performance of the electronic device ("Yes" in operation 620), the electronic device may add the performed activity to an activity list in operation 630. The activity list (e.g., the activity list 550 of FIG. 5) may map and store the tag (e.g., ATag) of an activity, a timer time to be used for producing a sample map for each activity, and at least one operation (or function) executed when each activity is performed. According to an embodiment, only when an activity belongs to a predetermined activity that is capable of affecting the performance of the electronic device, the electronic device may store information associated with the corresponding activity in the activity list.

According to an embodiment, in operation 640, the electronic device may initiate a timer for collecting delay time information. Here, the timer defines a time interval for collecting delay time information when an operation of an activity is performed, and in case that the timer is initiated, the electronic device may identify a delay time and a previous delay time of each operation until the timer expires, and may store a gap therebetween in a sample map.

According to an embodiment, in operation 650, the electronic device may calculate a delay time incurred by an activity until the timer expires and may produce a sample map of the corresponding activity. According to an embodiment, the sample map may record a gap (or a difference, a variation, etc.) between a delay time incurred after the user activity is performed and a previous delay time. According to an embodiment, the electronic device may produce a sample map (e.g., sample map A 520, sample map B 530, and sample map C 540 of FIG. 5) for each activity performed (e.g., activity A, activity B, and activity C). According to an embodiment, in case that an operation performed according to an activity and a delay time are not recorded in a latency list (e.g., the latency list 510 of FIG. 5), the electronic device may calculate a gap of the corresponding operation to be 0.

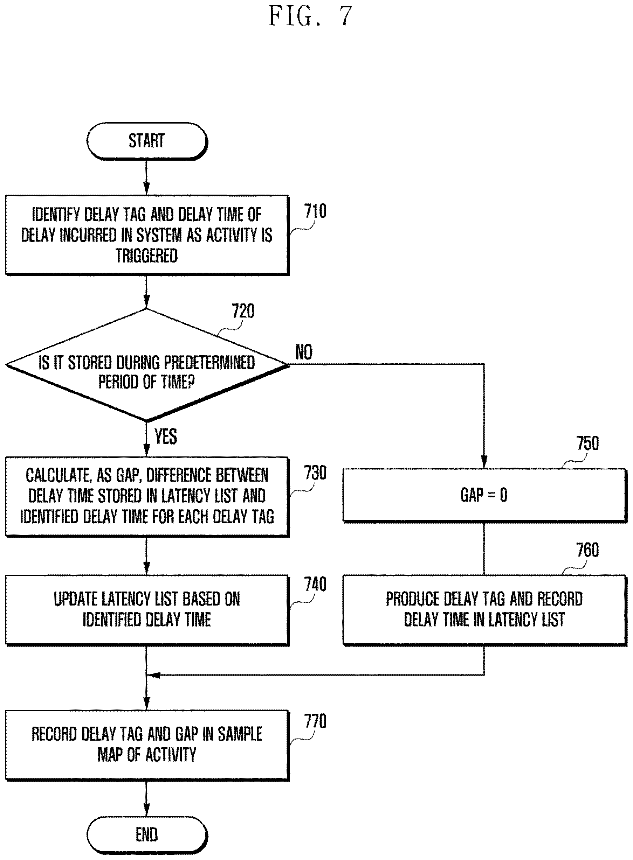

FIG. 7 is a flowchart of a process in which an electronic device identifies and records a delay time according to an embodiment.

The illustrated method may be performed by an electronic device (e.g., the electronic device 300 of FIG. 3) and, for example, may be performed by a processor (e.g., the processor 310 of FIG. 3) of the electronic device. Hereinafter, the description of technical features which have been described above may be omitted. The illustrated method may be performed after an operation (e.g. operation 650) of producing a sample map of FIG. 6, and at least some of the operations illustrated in FIG. 7 may be performed before the operations illustrated in FIG. 6 or may be performed at least partially the same time.

According to an embodiment, in operation 710, an electronic device identifies a delay tag and a delay time of a delay incurred in a system as an activity is triggered. For example, upon detecting an activity, the electronic device may identify an operation executed according to the activity, and may identify a delay tag corresponding to the identified operation from a latency list (e.g., the latency list 510 of FIG. 5).

According to an embodiment, in operation 720, the electronic device may identify whether a delay tag (DTag) of the operation executed is stored in the latency list.

According to an embodiment, in case that a delay tag of the operation executed is stored in the latency list ("Yes" in operation 720), the electronic device may calculate, for each delay tag, a gap (or a difference, a variation, etc.) between a previous delay time stored in the latency list and a delay time incurred when an operation is executed in operation 730.

According to an embodiment, in operation 740, the electronic device may update, based on the identified delay time, a delay time mapped to a delay tag of the latency list. For example, the electronic device may update a delay time mapped to a delay tag with a delay time identified when a predetermined operation recorded in the latency list is executed and, subsequently, in case that a new activity is performed, the electronic device may calculate a gap of a delay time by using the updated delay time (or a previous delay time).

According to an embodiment, in case that a delay tag of the operation executed is not stored in the latency list ("No" in operation 720), the electronic device may calculate a gap between a previous delay time and incurred delay time of the corresponding operation to be 0 in operation 750.

According to an embodiment, in operation 760, the electronic device may produce a delay tag of the corresponding operation in the latency list, and may record a delay time. Subsequently, when a new activity is performed, a gap of a delay time of the corresponding operation may be calculated using the newly recorded delay time (or a previous delay time).

According to an embodiment, in operation 770, the electronic device may record the delay tag and the calculated gap of a delay time in a sample map (e.g., sample map A 520, sample map B 530, and sample map C 540 of FIG. 5) of the activity. The method of recording a delay tag and a gap of a delay time in a sample map has been described with reference to FIG. 5.

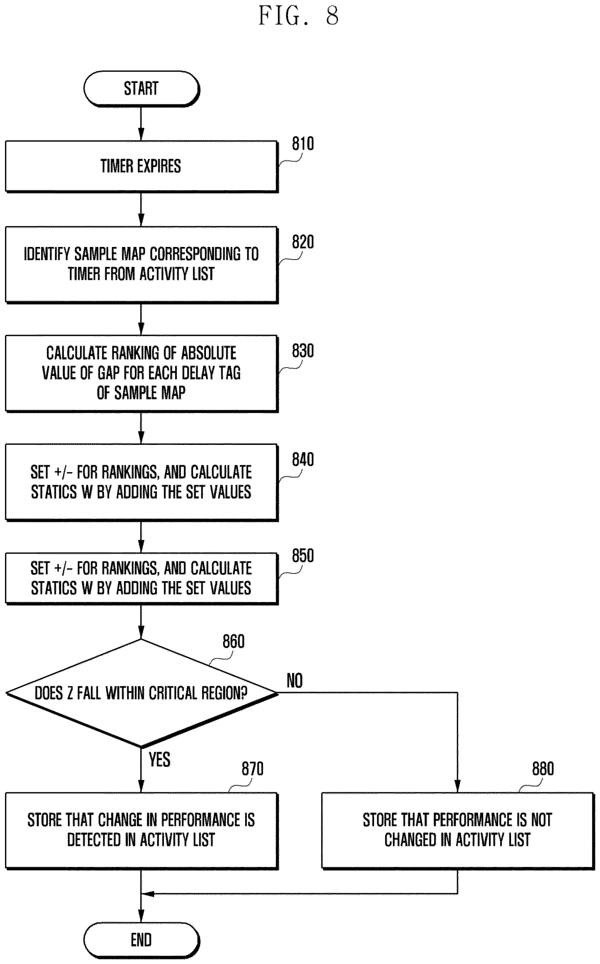

FIG. 8 is a flowchart of a process in which an electronic device detects a change in a performance via statistical analysis according to an embodiment.

The illustrated method may be performed by an electronic device (e.g., the electronic device 300 of FIG. 3) and, for example, may be performed by a processor (e.g., the processor 310 of FIG. 3) of the electronic device. Hereinafter, the description of technical features which have been described above may be omitted.

The illustrated method may be performed after an operation (e.g. operation 770) of recording a delay tag and a delay time in a sample map of FIG. 7, and at least some of the operations illustrated in FIG. 8 may be performed before the operations illustrated in FIG. 7 or may be performed at least partially the same time.

According to an embodiment, in operation 810, an electronic device may identify the expiration of a timer that is initiated when an activity is performed. The electronic device may identify a delay time incurred by an operation executed while the timer operates, and may record the identified delay time in a sample map.

According to an embodiment, in operation 820, the electronic device may identify a sample map corresponding to the timer that expires from an activity list. For example, the electronic device may produce a sample map corresponding to each activity performed, and the sample map may store a gap between a delay time, which is incurred as an activity is performed, and a previous delay time for each operation (or a delay tag).

According to an embodiment, the electronic device may determine, via statistical analysis, whether a change occurs in the performance of the electronic device. The electronic device may calculate a statistical value via designated statistical analysis by using, as input values, a plurality of calculated gaps respectively corresponding to a plurality of operations, and may determine, based on the calculated statistical value, whether a change in the performance of the electronic device occurs. Here, according to an embodiment, a statistical analysis may be the Wilcoxon signed rank test, but is not limited thereto.

According to an embodiment, in operation 830, the electronic device may calculate the absolute value of a gap mapped to each delay tag of the sample map, and may obtain rankings of the absolute values. For example, the differences between delay times and previous delay times identified from the delay tags 1 to 6 of operations executed according to a predetermined activity may be 23, -5, 10, 102, 43, and 2. In addition, the absolute value of the calculated value may be 23, 5, 10, 102, 43, and 2, and their rankings may be 4, 2, 3, 6, 5, and 1.

According to an embodiment, in operation 840, the electronic device may set + or - for the calculated rankings, and may calculate statistics W by adding the set values. In case that the delay time identified as an operation is executed is greater than a previous delay time recorded in the activity list, + is assigned to a ranking, and in case that the delay time is less than the previous delay time, - is assigned to a ranking. Accordingly, the calculated rankings may be 4, -2, 3, 6, 5, and 1. In addition, statistics W may be calculated as 4 - 2 + 3 + 6 + 5 + 1 = 17 which is the sum of sign rankings of DTags.

Examples of a gap and a sign ranking calculated for a delay tag of each operation are as shown in Table 1 below.

[Table 1]

| DTag | Gap | Ranking | Sign ranking |
|---|---|---|---|
| lock_registerReceiverWithFeature_15463 | 23 | 4 | 4 |
| lock_getPendingJobs_1285 | -5 | 2 | -2 |
| mainlooper_QuotaController | 10 | 3 | 3 |
| mainlooper_TrustManagerService | 102 | 6 | 6 |
| binder_2714_10 | 43 | 5 | 5 |
| binder_2714_E | 2 | 1 | 1 |

According to an embodiment, in operation 850, the electronic device may calculate a standard value Z by performing normal approximation of statistics W. For example, the electronic device may calculate a standard value Z based on Equation 1 given below.

[Equation 1]

$$Z = \frac{|W| - 1/2}{\sqrt{[n(n + 1)(2n + 1)]/6}}$$

In Equation 1, W represents statistics obtained by adding sign rankings, and n may be the number of gaps stored in a sample map.

According to an embodiment, in operation 860, the electronic device may identify whether the calculated standard value Z falls within a critical region, which may be predefined.

According to an embodiment, in case that the standard value Z falls within the critical region ("Yes" in operation 860), the electronic device may determine that a change in the performance of the electronic device occurs due to an activity, and may record, in the activity list, that a change in the performance is detected in operation 870. For example, in case that a significance level is determined to be 5% and statistics Z based on the one-tailed test is greater than or equal to 1.645, this may fall within a critical region. The calculated Z value in Table 2 is approximately 1.72966 and is greater than a reference value of 1.645, and thus the electronic device may determine that a change in the performance of the electronic device is incurred due to a user activity performed.

According to an embodiment, in case that the standard value Z does not fall within the critical region (or falls within an acceptance region) ("No" in operation 860), the electronic device may determine that the activity executed does not cause a change in the performance of the electronic device, and may record, in the activity list, that the performance does not change in operation 880.

According to an embodiment, in case that activities A, B, and C are performed sequentially (or at least partially the same time), the electronic device may perform operations 810 to 880 with respect to each activity, and may identify whether the activity affects a change in the performance of the electronic device. The electronic device may map the identified result to ATag of each activity and store the same in the activity list.

FIG. 9 is a diagram illustrating a graphic user interface provided when the performance of an electronic device changes according to an embodiment.

According to an embodiment, in case that a change in the performance of an electronic device (e.g., the electronic device 300 of FIG. 3) is incurred due to a user activity, the electronic device may provide a notification indicating a change of the performance. According to an embodiment, the electronic device may provide a graphic user interface including a notification indicating a performance change via a display (e.g., the display 330 of FIG. 3). For example, the electronic device may display a graphic user interface including the content of an activity (e.g., file downloading, application installation, photographing, or the like) that causes a change in the performance and an item for restoring a state before each activity was executed.

Referring to FIG. 9, in case that the electronic device detects a change in the performance incurred by a user activity, the electronic device may display a graphic user interface 910 indicating a change in the performance in the form of a popup via a display. In case that the user selects a details button 915, a graphic user interface 920 may be displayed, in which an activity that causes a change in the performance may be identified. The graphic user interface 920 displayed when the details is selected may include icons and descriptions 922, 924, and 926 respectively indicating file downloading, application installation, and photographing which are activities executed, and may display whether a change in the performance is incurred by each activity. However, the embodiment is not limited thereto and a user may also be notified in a different manner, e.g. via an acoustic signal or the like.

According to an embodiment, the electronic device may restore, based on a user input to a graphic user interface, a state before a selected activity was executed. For example, based on a user selection, the processor may delete an application that causes a change in the performance of the electronic device, or may delete a file downloaded, or may restore a changed setting (e.g., a power saving mode) to an existing state. In case that a change in the performance is incurred by an installed application in the example of FIG. 9, a button for deleting the corresponding application may be provided, and the installed application may be deleted when a user selects the corresponding button.

According to an embodiment, the electronic device may provide, to a user, a notification indicating a change in the performance via another method, instead of a graphic user interface. For example, the electronic device may provide a notification indicating a change in the performance as an audio signal via a speaker (not illustrated) or an external audio device (e.g., an external speaker, earphones, earbuds) connected in a wired/wireless manner.

An electronic device according to an embodiment of the disclosure may include a memory and a processor operatively connected to the memory.

According to an embodiment, the processor may detect an activity performed based on a user input and may execute a plurality of operations of the activity.

According to an embodiment, the processor may identify a delay time incurred by each of the plurality of operations executed, may identify, from a list stored in the memory, previous delay times stored by being mapped to the plurality of performed operations, may calculate, for each of the plurality of operations, a gap between a previous delay time identified from the list and a delay time identified when the operation is executed, and may determine, based on the plurality of calculated gaps, whether a change in the performance of the electronic device occurs.

According to an embodiment, when determining that a change in the performance of the electronic device occurs, the processor may be configured to provide a notification indicating the change in the performance.

According to an embodiment, the electronic device may further include a display, and the processor may display, on the display, a graphic user interface including the notification indicating the change in the performance.

According to an embodiment, based on a user input to the graphic user interface, the processor may be configured to restore a state before the activity was performed.

According to an embodiment, the processor may be configured to calculate a statistical value via designated statistical analysis using, as an input value, the plurality of calculated gaps respectively corresponding to the plurality of operations, and to determine, based on the calculated statistical value, whether a change in the performance of the electronic device occurs.

According to an embodiment, the statistical analysis is a Wilcoxon signed rank test.

According to an embodiment, the processor may assign, based on magnitudes of absolute values, rankings to the plurality of calculated gaps, may calculate statistics W by adding the plurality of gaps, may calculate a standard value Z by performing normal approximation of the calculated statistics W, and, in case that the calculated standard value Z is greater than or equal to a reference value, may determine that a change in the performance of the electronic device occurs.

According to an embodiment, the processor may be configured to operate a timer including a designated time in case that the activity is detected, and to identify a delay time incurred by each of the plurality of executed operations until the timer expires.

According to an embodiment, the processor may be configured to produce a sample map to which a plurality of performed operations identified until the timer expires and a gap calculated for each of the plurality of operations are mapped.

According to an embodiment, in case that a tag and a previous delay time of an operation executed according to the activity are not stored in the list stored in the memory, the processor may be configured to calculate the gap to be 0.

According to an embodiment, based on a delay time incurred by an operation executed according to the activity, the processor may be configured to update a previous delay time of the list stored in the memory.

According to an embodiment, the operations included in the activity may include at least some among at least one process, at least one thread, and at least one function.

A method of detecting a change in the performance of an electronic device according to an embodiment of the disclosure may include an operation of detecting an activity incurred based on a user input, an operation of executing a plurality of operations included in the activity, an operation of identifying a delay time incurred by each of the plurality of executed operations, an operation of identifying, from a list stored in a memory, previous delay times stored by being mapped to the plurality of executed operations, an operation of calculating, for each of the plurality of operations, a gap between the previous delay time identified from the list and a delay time identified when the operation is executed, and an operation of determining, based on the plurality of calculated gaps, whether a change in the performance of the electronic device occurs.

According to an embodiment, the method may further include an operation of providing a notification indicating the change in the performance in case that the performance of the electronic device is determined as having a change.

According to an embodiment, the method may further include an operation of restoring, based on a user input to a graphic user interface including the notification, a state before the activity was performed.

According to an embodiment, the operation of determining whether a change in the performance of the electronic device occurs may include an operation of calculating a statistical value via designated statistical analysis using, as an input value, the plurality of calculated gaps corresponding to the plurality of operations, and an operation of determining, based on the calculated statistical value, whether a change in the performance of the electronic device occurs.

According to an embodiment, the statistical analysis is a Wilcoxon signed rank test, and the operation of calculating the statistical value may include an operation of assigning, based on magnitudes of absolute values, rankings to the plurality of calculated gaps, an operation of calculating statistics W by adding the plurality of gaps, and an operation of calculating standard value Z by performing normal approximation of the calculated statistics W, and the operation of determining, based on the calculated statistical value, whether a change in the performance of the electronic device occurs may include an operation of determining that the change in the performance of the electronic device occurs in case that the calculated standard value Z is greater than or equal to a reference value.

According to an embodiment, the method may further include an operation of operating a timer including a designated time in case that the activity is detected, and the operation of identifying a delay time incurred by each of the plurality of operations executed may include an operation of identifying a delay time incurred by each of the plurality of executed operations until the timer expires.

According to an embodiment, based on a delay time incurred by an operation executed according to the activity, the method may further include an operation of updating a previous delay time of the list stored in the memory.

According to an embodiment, the operations included in the activity may include at least some among at least one process, at least one thread, and at least one function.

According to an embodiment, instructions to perform the method may be stored in a non-transitory computer-readable recording medium.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101, 300) comprising:

   a memory (130, 320); and
   a processor (120, 310) operatively connected to the memory (130, 320),
   wherein the memory (130, 320) stores instructions executable by the processor (120, 310), when executed, cause the electronic device (101, 300) to:

      detect an activity incurred based on a user input;

execute a plurality of operations included in the activity;

identify a delay time incurred by each of the plurality of operations executed;

identify, from a list stored in the memory (130, 320), previous delay times stored by being mapped to the plurality of performed operations;

calculate, for each of the plurality of operations, a gap (1-1, 1-3, 2-1, 2-2, 3-1, 3-2, 3-3, 4-1) between a previous delay time identified from the list and a delay time identified in case that the operation is executed; and

determine, based on the plurality of calculated gaps (1-1, 1-3, 2-1, 2-2, 3-1, 3-2, 3-3, 4-1), whether a change in a performance of the electronic device (101, 300) occurs.

2. The electronic device (101, 300) of claim 1, wherein the memory (130, 320) stores instructions cause the electronic device (101, 300) to, in case of determining that a change in the performance of the electronic device (101, 300) occurs, provide a notification indicating the change in the performance.

3. The electronic device (101, 300) of claim 2, further comprising a display (330),
wherein the memory (130, 320) stores instructions cause the electronic device (101, 300) to display (330), on the display (330), a graphic user interface (910, 920) including the notification indicating the change in the performance.

4. The electronic device (101, 300) of claim 3, wherein the memory (130, 320) stores instructions cause the electronic device (101, 300) to, based on a user input to the graphic user interface (910, 920), restore a state before the activity was performed.

5. The electronic device (101, 300) of one of claims 1 to 4, wherein the memory (130, 320) stores instructions cause the electronic device (101, 300) to:

calculate a statistical value via designated statistical analysis using, as an input value, the plurality of calculated gaps (1-1, 1-3, 2-1, 2-2, 3-1, 3-2, 3-3, 4-1) respectively corresponding to the plurality of operations; and
determine, based on the calculated statistical value, whether a change in the performance of the electronic device (101, 300) occurs.

6. The electronic device (101, 300) of claim 5, wherein the designated statistical analysis is a Wilcoxon signed rank test, and
wherein the memory (130, 320) stores instructions cause the electronic device (101, 300) to:

assign, based on magnitudes of absolute values, rankings to the plurality of calculated gaps (1-1, 1-3, 2-1, 2-2, 3-1, 3-2, 3-3, 4-1);
calculate statistics (W) by adding the plurality of gaps (1-1, 1-3, 2-1, 2-2, 3-1, 3-2, 3-3, 4-1);
calculate a standard value (Z) by performing normal approximation of the calculated statistics (W); and
in case that the calculated standard value (Z) is greater than or equal to a reference value, determine that a change in the performance of the electronic device (101, 300) occurs.

7. The electronic device (101, 300) of one of claims 1 to 6, wherein the memory (130, 320) stores instructions cause the electronic device (101, 300) to:

operate a timer including a designated time in case that the activity is detected; and
identify a delay time incurred by each of the plurality of executed operations until the timer expires; and
produce a sample map (520, 530, 540) to which a plurality of performed operations identified until the timer expires and a gap (1-1, 1-3, 2-1, 2-2, 3-1, 3-2, 3-3, 4-1) calculated for each of the plurality of operations are mapped.

8. The electronic device (101, 300) of one of claims 1 to 7, wherein the memory (130, 320) stores instructions cause the electronic device (101, 300) to, in case that a tag and a previous delay time of an operation executed according to the activity are not stored in the list stored in the memory (130, 320), calculate the gap (1-1, 1-3, 2-1, 2-2, 3-1, 3-2, 3-3, 4-1) to be 0.

9. The electronic device of one of claims 1 to 10, wherein the memory (130, 320) stores instructions causes the electronic device (101, 300) to, based on a delay time incurred by an operation executed according to the activity, update a previous delay time of the list stored in the memory (130, 320).

10. The electronic device of one of claims 1 to 9, wherein the operations included in the activity comprise at least some among at least one process, at least one thread, and at least one function.

11. A method of detecting a change in a performance of an electronic device (101, 300), the method comprising:

detecting an activity incurred based on a user input;
executing a plurality of operations included in the activity;
identifying a delay time incurred by each of the plurality of executed operations;
identifying, from a list stored in a memory (130, 320), previous delay times stored by being mapped to the plurality of executed operations;
calculating, for each of the plurality of operations, a gap (1-1, 1-3, 2-1, 2-2, 3-1, 3-2, 3-3, 4-1) between the previous delay time identified from the list and a delay time identified in case that the operation is executed; and
determining, based on the plurality of calculated gaps (1-1, 1-3, 2-1, 2-2, 3-1, 3-2, 3-3, 4-1), whether a change in a performance of the electronic device (101, 300) occurs.

12. The method of claim 11, further comprising:
providing a notification indicating the change in the performance in case that the performance of the electronic device (101, 300) is determined as having a change.

13. The method of one of claims11 or 12, wherein the determining of whether a change in the performance of the electronic device (101, 300) occurs comprises:

calculating a statistical value via designated statistical analysis using, as an input value, the plurality of calculated gaps (1-1, 1-3, 2-1, 2-2, 3-1, 3-2, 3-3, 4-1) corresponding to the plurality of operations; and
determining, based on the calculated statistical value, whether a change in the performance of the electronic device (101, 300) occurs.

14. The method of claim 13, wherein the designated statistical analysis is a Wilcoxon signed rank test, and wherein the calculating of the statistical value comprises:

assigning, based on magnitudes of absolute values, rankings to the plurality of calculated gaps (1-1, 1-3, 2-1, 2-2, 3-1, 3-2, 3-3, 4-1);
calculating statistics (W) by adding the plurality of gaps (1-1, 1-3, 2-1, 2-2, 3-1, 3-2, 3-3, 4-1); and
calculating standard value (Z) by performing normal approximation of the calculated statistics (W), and
wherein, based on the calculated statistical value, the determining of whether a change in the performance of the electronic device (101, 300) occurs comprises:
determining that a change in the performance of the electronic device (101, 300) occurs in case that the calculated standard value (Z) is greater than or equal to a reference value.

15. A non-transitory computer-readable recording medium storing instructions for performing the method of one of claims 11 to 14.

# FIG. 1

EP 4 443 303 A1

# FIG. 2

**PROGRAM** (140, 146)

## APPLICATIONS

| 251 | 253 | 255 | 257 | 259 | 261 | 263 |
|---|---|---|---|---|---|---|
| HOME | DIALER | SMS/MMS | IM | BROWSER | CAMERA | ALARM |

| 265 | 267 | 269 | 271 | 273 | 275 | 277 |
|---|---|---|---|---|---|---|
| CONTACT | VOICE RECOGNITION | E-MAIL | CALENDAR | MEDIA PLAYER | ALBUM | WATCH |

| 279 | 281 |
|---|---|
| HEALTH | ENVIRONMENT INFORMATION |

## MIDDLEWARE (144)

| 201 | 203 | 205 | 207 | 209 |
|---|---|---|---|---|
| APPLICATION MANAGER | WINDOW MANAGER | MULTIMEDIA MANAGER | RESOURCE MANAGER | POWER MANAGER |

| 211 | 213 | 215 | 217 | 219 |
|---|---|---|---|---|
| DATABASE MANAGER | PACKAGE MANAGER | CONNECTIVITY MANAGER | NOTIFICATION MANAGER | LOCATION MANAGER |

| 221 | 223 | 225 | 227 |
|---|---|---|---|
| GRAPHIC MANAGER | SECURITY MANAGER | TELEPHONY MANAGER | VOICE RECOGNITION MANAGER |

## OPERATING SYSTEM (142)

EP 4 443 303 A1

FIG. 3

300

| 330 | 310 | 320 |
|-----|-----|-----|
| DISPLAY | PROCESSOR | MEMORY |

340

INPUT MODULE

350

COMMUNICATION MODULE

# FIG. 4

System process — 410
400

Delay event generator — 411

Perflog.class (.java)

Perflog JNI library (.cpp)

Liperflog.so

User interface — 416

Performance daemon — 430

Statistical calculator — 431

Activity manager — 436

Statistics data

Activity data

Internal memory — 450

FIG. 5

**Latency list** (510)

| DTag1 | Delay1 |
| DTag2 | Delay2 |
| DTag3 | Delay3 |
| DTag4 | Delay4 |

**Sample map A** (520)

| DTag1 | Gap 1-1 |
| DTag2 | Gap 2-1 |
| DTag3 | Gap 3-1 |
| DTag4 | Gap 4-1 |

**Sample map B** (530)

| DTag2 | Gap2-2 |
| DTag3 | Gap3-2 |
| DTag4 | Gap4-2 |

**Sample map C** (540)

| DTag1 | Gap1-3 |
| DTag3 | Gap3-3 |
| DTag4 | Gap4-3 |

**Activity list** (550)

| ATag1 | Timer1 | W1 |
| ATag2 | Timer2 | W2 |
| ATag3 | Timer3 | W3 |

# FIG. 6

```
          ┌──────────────┐
          │    START     │
          └──────┬───────┘
                 ▼
     ┌───────────────────────────┐   610
     │   ACTIVITY IS TRIGGERED    │
     └───────────┬───────────────┘
                 ▼
                              620
            IS ACTIVITY CAPABLE OF
        AFFECTING PERFORMANCE OF ELECTRONIC    ──NO──┐
                   DEVICE?                           │
                 │                                   │
                YES                                  │
                 ▼                                   │
     ┌───────────────────────────┐   630            │
     │ ADD PERFORMED ACTIVITY TO  │                  │
     │      ACTIVITY LIST         │                  │
     └───────────┬───────────────┘                  │
                 ▼                                   │
     ┌───────────────────────────┐   640            │
     │ INITIATE TIMER FOR         │                  │
     │ COLLECTING DELAY TIME      │                  │
     └───────────┬───────────────┘                  │
                 ▼                                   │
     ┌───────────────────────────┐   650            │
     │ CALCULATE DELAY TIME       │                  │
     │ INCURRED BY ACTIVITY       │                  │
     │ UNTIL TIMER EXPIRES, AND   │                  │
     │ PRODUCE SAMPLE MAP         │                  │
     │ OF CORRESPONDING ACTIVITY  │                  │
     └───────────┬───────────────┘                  │
                 ▼◄─────────────────────────────────┘
          ┌──────────────┐
          │     END      │
          └──────────────┘
```

# FIG. 7

START

IDENTIFY DELAY TAG AND DELAY TIME OF DELAY INCURRED IN SYSTEM AS ACTIVITY IS TRIGGERED — 710

IS IT STORED DURING PREDETERMINED PERIOD OF TIME? — 720

NO

GAP = 0 — 750

PRODUCE DELAY TAG AND RECORD DELAY TIME IN LATENCY LIST — 760

YES

CALCULATE, AS GAP, DIFFERENCE BETWEEN DELAY TIME STORED IN LATENCY LIST AND IDENTIFIED DELAY TIME FOR EACH DELAY TAG — 730

UPDATE LATENCY LIST BASED ON IDENTIFIED DELAY TIME — 740

RECORD DELAY TAG AND GAP IN SAMPLE MAP OF ACTIVITY — 770

END

FIG. 8

START

TIMER EXPIRES — 810

IDENTIFY SAMPLE MAP CORRESPONDING TO TIMER FROM ACTIVITY LIST — 820

CALCULATE RANKING OF ABSOLUTE VALUE OF GAP FOR EACH DELAY TAG OF SAMPLE MAP — 830

SET +/- FOR RANKINGS, AND CALCULATE STATICS W BY ADDING THE SET VALUES — 840

SET +/- FOR RANKINGS, AND CALCULATE STATICS W BY ADDING THE SET VALUES — 850

DOES Z FALL WITHIN CRITICAL REGION? — 860

NO

YES

STORE THAT CHANGE IN PERFORMANCE IS DETECTED IN ACTIVITY LIST — 870

STORE THAT PERFORMANCE IS NOT CHANGED IN ACTIVITY LIST — 880

END

# FIG. 9

910

DETECT DETERIORATION IN PERFORMANCE

| CANCEL | DETAILS > |

915

920

922
File download ✓

924
App install ✕

926
Take a picture

## INTERNATIONAL SEARCH REPORT

| International application No. |
|---|
| **PCT/KR2024/001088** |

### A. CLASSIFICATION OF SUBJECT MATTER

**G06F 11/34**(2006.01)i; **G06F 11/30**(2006.01)i; **G06F 11/32**(2006.01)i; **G06F 11/14**(2006.01)i

According to International Patent Classification (IPC) or to both national classification and IPC

### B. FIELDS SEARCHED

Minimum documentation searched (classification system followed by classification symbols)

G06F 11/34(2006.01); G06F 11/07(2006.01); G06F 11/30(2006.01); G06F 12/02(2006.01); G06F 3/06(2006.01); G06F 9/46(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 성능(performance), 액티비티(activity), 동작(action), 지연 시간(delay time), 리스트(list), 맵핑(mapping), 이전(previous), 갭(gap)

### C. DOCUMENTS CONSIDERED TO BE RELEVANT

| Category* | Citation of document, with indication, where appropriate, of the relevant passages | Relevant to claim No. |
|---|---|---|
| Y | JP 09-179754 A (MITSUBISHI ELECTRIC CORP.) 11 July 1997 (1997-07-11) <br> See paragraphs [0007], [0010]-[0011], [0020], [0031], [0035] and [0044]. | 1-15 |
| Y | KR 10-2012-0064553 A (ELECTRONICS AND TELECOMMUNICATIONS RESEARCH INSTITUTE) 19 June 2012 (2012-06-19) <br> See paragraph [0054]; and claim 2. | 1-15 |
| Y | JP 2019-012477 A (FUJITSU LTD.) 24 January 2019 (2019-01-24) <br> See paragraphs [0002], [0005] and [0068]. | 6,14 |
| A | JP 2008-071237 A (HITACHI LTD.) 27 March 2008 (2008-03-27) <br> See paragraphs [0016] and [0052]-[0059]. | 1-15 |
| A | US 9128629 B1 (EMC CORPORATION) 08 September 2015 (2015-09-08) <br> See claims 1-3 and 12. | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **30 April 2024** | **30 April 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/001088**

| Patent document cited in search report | | | Publication date (day/month/year) | Patent family member(s) | | | Publication date (day/month/year) |
|---|---|---|---|---|---|---|---|
| JP | 09-179754 | A | 11 July 1997 | None | | | |
| KR | 10-2012-0064553 | A | 19 June 2012 | None | | | |
| JP | 2019-012477 | A | 24 January 2019 | None | | | |
| JP | 2008-071237 | A | 27 March 2008 | JP | 4839164 | B2 | 21 December 2011 |
| | | | | US | 2008-0071939 | A1 | 20 March 2008 |
| | | | | US | 7577770 | B2 | 18 August 2009 |
| US | 9128629 | B1 | 08 September 2015 | None | | | |

Form PCT/ISA/210 (patent family annex) (July 2022)